(19) **Europäisches Patentamt**

**European Patent Office**

**Office européen des brevets**

(11) **EP 1 626 452 A1**

(12) **EUROPEAN PATENT APPLICATION**

(43) Date of publication:
**15.02.2006 Bulletin 2006/07**

(51) Int Cl.:
*H01M 8/02* (2006.01)   *H01M 8/04* (2006.01)
*H01M 8/10* (2006.01)   *H01M 8/06* (2006.01)

(21) Application number: **04258171.0**

(22) Date of filing: **29.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **13.08.2004 JP 2004235980**

(71) Applicant: **FUJITSU LIMITED**
**Kawasaki-shi,**
**Kanagawa 211-8588 (JP)**

(72) Inventor: **Takei, Fumio,**
**Fujitsu Limited**
**Kawasaki-shi,**
**Kanagawa 211-8588 (JP)**

(74) Representative: **Fenlon, Christine Lesley**
**Haseltine Lake,**
**Imperial House,**
**15-19 Kingsway**
**London WC2B 6UD (GB)**

(54) **Fuel cell system, electrical apparatus and method for recovering water formed in fuel cell system**

(57)     A fuel cell system includes a fuel-cell power generation part (50) containing a fuel electrode (55), a solid electrolyte (54) and an air electrode (53), and a heat-exchange chamber (110) configured to cool a gas emitted from the fuel-cell power generation part (50) to thereby form water. A power generation reaction using a fuel yields electric power and water in the fuel-cell power generation part (50). The electric power is utilized as driving force typically for an electrical apparatus. A gas containing the water as vapor undergoes heat exchange and condensation to thereby form water in the heat-exchange chamber. The formed water remains inside the heat-exchange chamber (110) without leaking out. The fuel cell system is free from deteriorated performance and uncomfortable feeling in use and can easily and reliably recover the water.

FIG. 1

**Description**

CROSS-REFERENCE TO RELATED APPLICATIONS

This application is based upon and claims the benefits of the priority from the prior Japanese Patent Application No. 2004-235980, filed on August 13, 2004, the entire contents of which are incorporated herein by reference.

BACKGROUND OF THE INVENTION

Field of the Invention

The present invention relates to techniques for easily and reliably absorbing water formed in a fuel cell system. More specifically, it relates to a fuel cell system and a method for recovering water formed in the fuel cell system, and to an electrical apparatus having the fuel cell system.

Description of the Related Art

Portable information-processing apparatuses such as mobile phones and portable computer systems (notebook personal computers) have been more and more miniaturized, reduced in weight, increased in speed and improved in function. Thus, cells serving as power supplies thereof have been more and more miniaturized, reduced in weight and increased in capacity.

Most popular drive power supplies in the portable information-processing apparatuses are lithium-ion cells. The lithium-ion cells have a high drive voltage and a high cell capacity from their launch in market, and their performances have been improved along the progress of mobile phone apparatuses. Improvements in the performances of the lithium-ion cells, however, have some limitations, the lithium-ion cells become to fail to satisfactorily meet the requirements as the drive power supplies of such high-function portable information-processing apparatuses.

Under these circumstances, novel energy devices as alternatives for the lithium-ion cells have been developed. Among them, fuel cells have received attention. These fuel cells can generate electric power by supplying a fuel to an anode to thereby generate electrons and protons, and allowing the protons to react with oxygen supplied to a cathode.

A key feature of the fuel cells is that the fuel is supplied to the anode and oxygen is supplied to the cathode. The fuel cells can thereby generate electric power over a long time by supplying the fuel and the oxygen. They can be applied as power supplies for equipment as in secondary cells (rechargeable batteries), except for supplying the fuel instead of charging in the secondary cells. In addition, fuel cells using methanol as the fuel have a theoretical energy density in terms of active material about ten times higher than that of the lithium-ion cells and can significantly contribute to miniaturization and weight reduction. Accordingly, attempts have been increasingly made to use such fuel cells not only as dispersed power sources and large-size power generators for electric-powered vehicles but also as subminiature power generating units in portable information-processing apparatuses such as notebook personal computers and mobile phones.

In the field of miniature fuel cells, "direct methanol fuel cells" using an aqueous methanol solution as the fuel have been increasingly researched and developed. Unit cells of the direct methanol fuel cells each generally have a fuel electrode, a solid electrolyte, an air electrode, and current collectors arranged so as to sandwich these components.

In the direct methanol fuel cells, water is generated according to the following mechanisms (1), (2) and (3) upon an electric power generation reaction of methanol serving as the fuel. Initially, (1) methanol as the fuel reacts with water (electric power generation reaction) to yield carbon dioxide and $H^+$s (protons) according to the following formula: $CH_3OH$ (fuel) $+H_2O \rightarrow CO_2$ (emitted from the fuel electrode) $+6H++6e-$. Next, (2) the $H^+$s (protons) in the solid electrolyte migrate from the fuel electrode to the air electrode (proton conduction) to yield an inward current in the fuel cell. Next, (3) the protons are oxidized in the air electrode to yield water according to the following formula: $6H^++3/2O_2+6e^- \rightarrow 3H_2O$. As is described above, water is generated typically by the electric power generation reaction in the air electrode. However, such water coming into the inside of an apparatus to be powered by the fuel cells may invite malfunctions or defects in the apparatus and uncomfortable wet conditions to a user. Thus, the fuel cells preferably have a structure and/or function to avoid the water from discharging to outside.

To avoid the water from residing in the fuel cell to thereby decrease gas permeability and voltage, water-transporting means made of a hydrophilic filler has been proposed (Japanese Patent Application Laid-Open (JP-A) No. 10-289723 and JP-A No. 07-326361). This technique, however, does not effectively prevent the water from leaking out from the fuel cell, which gives uncomfortable wet conditions to users.

Accordingly, it is desirable to provide a fuel cell system that is substantially free from, for example, deteriorated performance and uncomfortable feeling in use caused by water formed in a fuel-cell power generation part and can easily and reliably recover the water.

It is also desirable to provide an electrical apparatus that has the fuel cell system, is substantially free from, for example, deteriorated performance and uncomfortable feeling in use caused by the water formed in the fuel-cell power generation part, can easily and reliably recover the water and can be handled satisfactorily.

It is also desirable to provide a method for easily and reliably recovering water formed in a fuel cell system.

## SUMMARY OF THE INVENTION

An embodiment of the present invention can provide a fuel cell system containing a fuel-cell power generation part including at least a fuel electrode, a solid electrolyte and an air electrode, and a heat-exchange chamber configured to cool a gas emitted from the fuel-cell power generation part to thereby form water.

In a fuel cell system embodying the present invention, an electric power generation reaction utilizing the fuel occurs to thereby generate electric power in the fuel-cell power generation part. The generated electricity (electric power) is utilized as driving force for, for example, electrical apparatuses. The electric power generation reaction also yields water. The water vaporizes to form water vapor and diffuses into a gas. The gas is heat-exchanged, and the water vapor contained in the gas condenses to form water droplets inside the heat-exchange chamber. This prevents the water vapor contained in the gas from condensing outside the heat-exchange chamber and from causing condensation. The water droplets formed in the heat-exchange chamber remain inside thereof and do not leak out. Thus, the fuel cell system is substantially free from, for example, deteriorated performance and uncomfortable feeling in use caused by the water, can easily and reliably recover the water and can be handled satisfactorily.

Preferably, at least part of a wall of the heat-exchange chamber contains a porous membrane having continuous holes and/or pores communicating one surface of the wall with the other surface. In this configuration, the heat-exchange chamber isolates the gas containing the water vapor from outside by the action of the porous membrane, is hermetically sealed to such an extent as to prevent the water from leaking out macroscopically and keeps the inside temperature at the dew point of the water or below by the action of the porous membrane. This effectively prevents the condensation of the water outside the fuel cell system. In addition, the electric power generation is prevented from decreasing, since oxygen can permeate the porous membrane.

In the fuel cell system, the following aspects are preferred. Specifically, at least part of a wall of the heat-exchange chamber preferably contains a porous membrane having continuous holes and/or pores communicating one surface of the wall with the other surface. The porous membrane is preferably positioned at a wall of the heat-exchange chamber facing the fuel-cell power generation part. The porous membrane preferably has a thermal conductivity of 0.1 W/mK or more. The porous membrane preferably has an air permeability of 0.1 to 100,000 cc/cm$^2$·s. The porous membrane also preferably has a water permeability of 100 cc/cm$^2$·s or less. The porous membrane may have at least one of a simple through-hole structure and a random pore structure. Preferably, the fuel cell system further includes a metal layer at a plane of the porous membrane facing the fuel-cell power generation part. The surface of the porous membrane facing the fuel-cell power generation part is preferably water-repellent. The fuel cell system preferably further includes at least one driving channel on a surface of the porous membrane facing the fuel-cell power generation part, the at least one driving channel serving to guide water formed in the heat-exchange chamber. The driving channel preferably has a hydrophilic surface. The fuel cell system preferably further includes a heat-exchanger configured to exchange heat arranged in the heat-exchange chamber, in which the fuel cell system satisfies the following condition:

$$A \leq B$$

wherein A (W/mK) represents the thermal conductivity of the porous membrane; and B (W/mK) represents the thermal conductivity of the heat-exchanger configured to exchange heat. The heat-exchanger configured to exchange heat preferably has a thermal conductivity of 10 to 100 W/mK. The heat-exchanger configured to exchange heat preferably contains one or more metals. The heat-exchanger configured to exchange heat may be at least one selected from the group consisting of rod-like members, feathered members and wire-like members. The heat-exchanger configured to exchange heat is preferably arranged in contact with the porous membrane. The fuel cell system preferably further includes a spacer configured to space out between the porous membrane and the fuel-cell power generation part, and the spacer preferably constitutes at least part of a wall of the heat-exchange chamber, the wall extending between the porous membrane and the fuel-cell power generation part. The fuel cell system preferably further includes a water-absorber configured to absorb the water formed in the heat-exchange chamber, and the water-absorber preferably constitutes at least part of a wall of the heat-exchange chamber, the wall extending between the porous membrane and the fuel-cell power generation part. Preferably, the fuel cell system further includes a body configured to collect the water formed in the heat-exchange chamber and to transport the water to the water-absorber, and the body preferably constitutes at least part of a wall of the heat-exchange chamber, the wall extending between the porous membrane and the fuel-cell power generation part. The spacer is preferably positioned over the water-absorber. Preferably, the fuel electrode, the solid electrolyte and the air electrode of the fuel-cell power generation part are laminated so that their lamination planes are substantially in parallel with a vertical direction.

Another aspect of the present invention further provides an electrical apparatus containing a fuel cell system embodying the present invention. In the electrical apparatus, an electric power generation reaction utilizing the fuel occurs to thereby generate electric power in the fuel cell system. The generated electricity (electric power) is utilized as driving force of the electrical apparatus. The electric power generation reaction also yields water. The water vaporizes to form water vapor and diffuses into a gas. The gas is cooled, and the water vapor contained in the gas condenses to form water droplets inside the heat-exchange chamber of the fuel cell system. The water droplets formed in the heat-exchange chamber of the fuel cell system remain inside the heat-exchange chamber and do not leak out. Thus, the electrical apparatus is substantially free from, for example, deteriorated performance and uncomfortable feeling in use caused by the water, can easily and reliably recover the water and can be handled satisfactorily.

The electrical apparatus is preferably at least one selected from, for example, mobile phones, mobile phone cradles, personal computers, digital cameras, portable audio apparatuses, MP3 players, PDAs (personal digital assistants) and toys.

In addition and advantageously, a further aspect of the present invention provides a method for recovering water formed in a fuel cell system, including the steps of condensing a gas containing water vapor by heat exchange in a heat-exchange chamber to thereby yield water, the water vapor being derived from water formed in a fuel-cell power generation part, the heat-exchange chamber at least partially having a porous membrane, and allowing a water-absorber configured to absorb the water formed in the heat-exchange chamber, to absorb the water formed as a result of condensation.

In the method for recovering water formed in a fuel cell system, an electric power generation reaction utilizing the fuel occurs to thereby form water in the fuel-cell power generation part. The water vaporizes to form water vapor and diffuses into a gas. The gas is heat-exchanged, and the water vapor contained in the gas condenses to form water droplets inside the heat-exchange chamber. The water formed as a result of condensation is easily and reliably removed in the heat-exchange chamber without leaking out from the fuel cell system.

Reference will now be made, by way of example, to the accompanying drawings, in which:

BRIEF DESCRIPTION OF THE DRAWINGS

FIG. 1 is a schematic view of a first embodiment of the fuel cell system of the present invention.
FIG. 2 is a sectional view of a first embodiment of a sectional structure of a unit fuel cell (fuel-cell power generation part).
FIG. 3 is a sectional view of a second embodiment of a sectional structure of a unit fuel cell (fuel-cell power generation part).
FIG. 4 is a schematic view of a second embodiment of the fuel cell system of the present invention.
FIG. 5 is a schematic view of an embodiment of a driving channel arranged on a surface of the porous membrane facing the heat-exchange chamber.
FIG. 6 is a schematic view of a third embodiment of the fuel cell system of the present invention, using heat-exchange rods as the heat-exchange means.
FIG. 7 is a schematic view of a fourth embodiment of the fuel cell system of the present invention, using heat-exchange fins as the heat-exchange means.
FIG. 8 is a schematic view of a fifth embodiment of the fuel cell system of the present invention, using heat-exchange wires as the heat-exchange means.
FIG. 9 is a schematic view of a sixth embodiment of the fuel cell system of the present invention, using heat-exchange fins and heat-exchange wires as the heat-exchange means.
FIG. 10 is a schematic view of a first embodiment of a sectional structure of the porous structure of the porous membrane.
FIG. 11 is a schematic view of a second embodiment of a sectional structure of the porous structure of the porous membrane.
FIGS. 12 and 13 are a schematic perspective view and a side view, respectively, of an embodiment of the fuel cell system.
FIG. 14 is a perspective view of a mobile phone cradled by a mobile phone cradle.
FIG.15 is a plan view of the mobile phone cradle shown in FIG. 14.
FIG. 16 is a schematic view of the mobile phone shown in FIG. 14.
FIG.17 is a schematic sectional view of the mobile phone cradled by the mobile phone cradle.

DESCRIPTION OF THE PREFERRED EMBODIMENTS

Fuel Cell System

The fuel cell system of the present invention comprises a heat-exchange chamber and a fuel-cell power generation part and may further comprise any other means and/or members such as water-collecting means, a fuel cartridge and a fuel interface according to necessity.

Heat-exchange Chamber

The heat-exchange chamber is a chamber (space) for heat-exchanging a gas emitted from the fuel-cell power generation part. The shape, size and other configurations of the heat-exchange chamber can be appropriately selected according to the purpose without limitation, as long as the heat-exchange chamber has the function of cooling the gas emitted from the fuel-cell power generation part to thereby form water.

The fuel-cell power generation part (a surface of the air electrode) preferably constitutes part of a wall of the heat-exchange chamber. Typically preferably, a porous membrane constitutes part of a wall of the heat-exchange chamber, which porous membrane has continuous holes and/or pores communicating one surface of the wall with the other.

The porous membrane is arranged at any position appropriately selected according to the purpose without limitation, but is preferably positioned at a wall of the heat-exchange chamber facing the fuel-cell power generation part (the surface near to the air electrode). This configuration enables the fuel-cell power generation part to efficiently utilize the gas transmitted through the porous membrane.

The porous membrane can have any thermal conductivity appropriately set according to the purpose without limitation, as long as it allows the gas emitted from the fuel-cell power generation part to undergo heat-exchange. The thermal conductivity is preferably large and is, for example, 0.1 W/mK or more and is more preferably 1 W/mK or more.

If the thermal conductivity is less than 0.1 W/mK, the gas emitted from the fuel-cell power generation part may not be efficiently heat-exchanged.

The air permeability of the porous membrane can be appropriately set according to the purpose without limitation, within ranges not adversely affecting the electric power generation reaction in the fuel-cell power generation part. The air permeability is preferably as large as, for example, 0.1 to 100,000 cc/cm$^2$·s, more preferably 1 to 10000 cc/cm$^2$·s, and specifically preferably 10 to 1000 cc/cm$^2$·s.

The air permeability less than 0.1 cc/cm$^2$·s may adversely affect the electric power generation reaction in the fuel-cell power generation part to thereby decrease the electric power generation. The air permeability exceeding 100,000 cc/cm$^2$·s may invite the water to leak out from the heat-exchange chamber.

The porosity of the porous membrane can be appropriately set according to the purpose without limitation and is, for example, preferably 10% to 95%, and more preferably 40% to 90%.

The porosity less than 10% may adversely affect the electric power generation reaction in the fuel-cell power generation part to thereby decrease the electric power generation. The porosity exceeding 95% may invite the water to leak out from the heat-exchange chamber.

The average pore diameter of the porous membrane can be appropriately set according to the purpose without limitation and is, for example, preferably 0.01 to 100 μm and more preferably 0.1 to 10 μm.

The average pore diameter less than 0.01 μm may adversely affect the electric power generation reaction in the fuel-cell power generation part to thereby decrease the electric power generation. The average pore diameter exceeding 100 μm may invite the water to leak out from the heat-exchange chamber.

The water permeability of the porous membrane can be appropriately set according to the purpose without limitation, within ranges not allowing the water to leak out from the heat-exchange chamber. The water permeability is preferably as small as, for example, 100 cc/cm$^2$·s or less and more preferably 10 cc/cm$^2$·s or less.

The water permeability exceeding 100 cc/cm$^2$·s may invite the water to leak out from the heat-exchange chamber.

The configuration of the holes and/or pores in the porous membrane can be appropriately set according to the purpose without limitation, as long as they communicate one surface of the porous membrane with the other. The configuration can be any of a simple through-hole structure, a random pore structure and a mixture of these structures. In the simple through-hole structure, a multiplicity of microholes extends from one surface to the other. In the random pore structure, a multiplicity of irregular pores are arranged so as to communicate one surface of the porous membrane with the other.

The thickness of the porous membrane can be appropriately set typically according to the air permeability and the water permeability without limitation and is, for example, preferably 1 to 1000 μm and more preferably 1 to 100 μm.

The thickness less than 1 μm may adversely affect the electric power generation reaction in the fuel-cell power generation part to thereby decrease the electric power generation. The thickness exceeding 1000 μm may invite the water to leak out from the heat-exchange chamber.

The porous membrane can have any suitable structure appropriately selected according to the purpose without limitation The porous membrane, for example, may comprise a single member or plural members and may have a single-layer structure or a multilayer structure.

When the porous membrane has such a multilayer structure, a layer exposed to the inside of the heat-exchange chamber preferably has a thermal conductivity greater than that of another layer. This achieves higher heat exchange efficiency. More specifically, it is preferred that a side of the porous membrane exposed to inside the heat-exchange chamber, typically a side of the porous membrane facing the fuel-cell power generation part, is composed of a metal layer having a high thermal conductivity.

The material for the porous membrane can be appropriately selected according to the purpose without limitation and includes, for example, organic materials, inorganic materials, and mixtures of these materials.

Examples of the organic materials are resins such as fluorocarbon resins, cellulose, cellulose nitrate, cellulose acetate, polyamides (nylons) and polyesters. Each of these can be used alone or in combination. Among them, the fluorocarbon resins are preferred for easily allowing the porous membrane to be water-repellent.

Examples of the fluorocarbon resins are poly-tetrafluoroethylenes, polyperfluoroethylenes, polytrif-

luoroethylenes, fluorinated ethylene-propylene and polyvinylidene fluorides.

Examples of the inorganic materials are metals and ceramics. The metals include, for example, gold, silver, aluminum, chromium, nickel, copper and tin.

Among these materials, those each having a high thermal conductivity are preferred.

Where necessary, the porous membrane has been subjected to, for example, a suitable surface treatment.

The surface treatment can be appropriately selected according to the purpose without limitation. Examples thereof are treatments for finishing the surface of the porous membrane so as to the surface is water-repellent or hydrophilic, of which preferred are surface vapor deposition, surface plating and surface treatment with a coupling agent. Such a surface treatment of the porous membrane can control the thermal conductivity of the porous membrane and the affinity of the porous membrane for water at desired levels.

As the surface vapor deposition, for example, a metal such as gold, silver, aluminum, chromium, nickel, copper or tin is vapor-deposited on the surface typically by vacuum vapor deposition or sputtering.

As the surface plating, for example, the metal is plated on the surface typically by electroless plating.

As the surface treatment with a coupling agent, for example, the surface of the porous membrane is hydrophilized or hydrophobed typically with a sililating agent or silane coupling agent.

The porous membrane may have a single-layer structure or a multilayer structure. In the latter case, the porous membrane may have a multilayer structure including porous membranes comprising different materials. It may also have a multilayer structure comprising a porous membrane of the resin and a mesh of the metal arranged on the surface of the porous membrane. It may also have a multilayer structure comprising a porous membrane of the resin and foil of the metal which has fine pores formed typically by etching or press working (stamping).

In the porous membrane, a surface exposed to the heat-exchange chamber, preferably a surface facing the fuel-cell power generation part, is preferably water-repellent. More preferably, surfaces of the holes and pores in the porous membrane are water-repellent. This configuration prevents the condensate water on the surface of the porous membrane from coming into the holes and pores in the porous membrane. This facilitates removal of the water from the porous membrane without clogging of the holes and pores with water droplets and prevents, for example, electric power generation efficiency from decreasing.

One or more driving channels for the water formed in the heat-exchange chamber are preferably arranged at a surface of the porous membrane exposed to the heat-exchange chamber, more preferably at a surface of the porous membrane facing the fuel-cell power generation part. This configuration allows the water to be removed efficiently.

The driving channel is not specifically limited and may have a physical structure typically comprising a groove, a chemical structure comprising, for example, a hydrophilic portion and a hydrophobic portion, and a mixture of these structures. When the driving channel has the chemical structure or a mixed structure of the chemical structure and the physical structure, the driving channel region preferably has a hydrophilic surface. This configuration allows the water to be removed efficiently.

The shape of the driving channel can be appropriately selected according to the purpose without limitation and is preferably such a shape as to transport the water in a gravitational direction. Preferably, the driving channel, for example, has a linear shape extending from above or a dendritic shape comprising the line as a main line and a multiplicity of branches obliquely extending to the main line from above.

The driving channel can be prepared by any process appropriately selected according to the purpose without limitation. Examples of the process are a process for forming a concave driving channel by using a mold such as a stamper; a process for patterning the driving channel typically by photolithography; and a process for patterning the driving channel typically by an ink-jet process. Each of these processes can be used alone or in combination.

Heat-exchange means, that is, a heat-exchanger configured to exchange heat, satisfying the following condition is preferably arranged in the heat-exchange chamber. Specifically, the heat-exchange means preferably satisfies the condition: $A \leq B$, wherein A (W/mK) represents the thermal conductivity of the porous membrane; and B (W/mK) represents the thermal conductivity of the heat-exchange means. This configuration facilitates the heat-exchange and allows the water to be removed efficiently.

The heat-exchange means, that is, a heat-exchanger configured to exchange heat, is not specifically limited, as long as it has a thermal conductivity equal to or greater than that of the porous membrane. The shape, structure, size and other configurations of the heat-exchange member can be appropriately selected according to the purpose.

The thermal conductivity of the heat-exchange means is preferably equal to or greater than that of the porous membrane and is preferably as great as, for example, 10 to 100 W/mK.

The thermal conductivity less than 10 W/mK may not sufficiently improve the heat exchange efficiency of the heat-exchange chamber. The thermal conductivity exceeding 100 W/mK may not yield sufficient advantages in line with, for example, cost.

The material for the heat-exchange means, that is, a heat-exchanger configured to exchange heat, may be any of organic materials and inorganic materials. Among them, inorganic materials are preferred, of which metals and ceramics are typically preferred.

Specific examples of the heat-exchange means are a rod-like member, a feathered member and a wire-like member. Each of these can be used alone or in combination.

The heat-exchange means, that is, a heat-exchanger configured to exchange heat, can be arranged at any position inside the heat-exchange chamber. The heat-exchange means is preferably arranged in contact with the porous membrane or in contact with the water-absorbing means mentioned later. By employing these configurations, the fuel cell system can efficiently carry out heat exchange and water removal. When the heat-exchange means is arranged in contact with the porous membrane, the water formed as a result of condensation on the heat-exchange means moves to the porous membrane and is efficiently drained upon the porous membrane. When the heat-exchange means is arranged in contact with the water-absorbing means, the water formed as a result of condensation on the heat-exchange means can be directly transported to the water-absorbing means.

At least part of a wall of the heat-exchange chamber preferably constitutes a spacer configured to space out the porous membrane from the fuel-cell power generation part. The spacer can space out the porous membrane from the fuel-cell power generation part at a specific interval, and the heat-exchange chamber can be easily constituted. The spacer herein is a member constituting the heat-exchange chamber and is referred to as, for example, "radiating means" or "radiator".

The distance (interval) between the fuel-cell power generation part and the porous membrane spaced out by the spacer can be appropriately set according to the purpose without limitation and is, for example, preferably 0.1 to 20 mm and more preferably 1 to 5 mm.

The distance (interval) less than 0.1 mm may invite decreased heat-exchange efficiency in the heat-exchange chamber and decreased water-removal efficiency. The distance exceeding 20 mm may not yield corresponding advantages and may lead to a large-sized fuel cell system.

The position of the spacer can be appropriately set according to the purpose without limitation. For example, the spacer is preferably arranged at a wall of the heat-exchange chamber extending between the fuel-cell power generation part and the porous membrane. More preferably, the spacer is arranged at a wall of the heat-exchange chamber extending in a direction substantially perpendicular to the layer plane of the fuel-cell power generation part and to the membrane plane of the porous membrane, which layer plane and membrane plane are in parallel with each other. More specifically, when the heat-exchange chamber has a rectangular parallelepiped shape, it is preferred that the fuel-cell power generation part faces the porous membrane, and the spacer extends between the fuel-cell power generation part and the porous membrane in a direction perpendicular to the fuel-cell power generation part and the porous membrane.

Preferably, at least part of a wall of the heat-exchange chamber constitutes water-absorbing means for absorbing the water formed in the heat-exchange chamber, that is, a water-absorber configured to absorb the water formed in the heat-exchange chamber. This configuration allows the water-absorbing means to efficiently absorb and fix the water formed in the heat-exchange chamber.

The water-absorbing means can be arranged at any position appropriately selected according to the purpose without limitation and is, for example, preferably arranged at a wall of the heat-exchange chamber extending between the fuel-cell power generation part and the porous membrane. This configuration allows the water-absorbing means to further efficiently absorb and fix the water formed in the heat-exchange chamber.

The water-absorbing means, that is, a water-absorber configured to absorb the water formed in the heat-exchange chamber, can be appropriately selected according to the purpose without limitation, as long as it can absorb the water formed in the fuel-cell power generation part of the fuel cell system. The water-absorbing means preferably comprises a water-absorptive member.

The water formed in the fuel cell system may be, for example, water formed as a result of the electric power generation reaction in the fuel cell system.

The water-absorptive member can be appropriately selected according to the purpose without limitation and is, for example, preferably one capable of fixing the absorbed water. This can easily fix the water formed in the fuel cell system and prevent the fixed water from discharging to the outside.

The water-absorptive member capable of fixing the absorbed water is not specifically limited, and its shape, structure, size and other configurations can be appropriately selected according typically to configurations of the fuel cell system.

Examples of the material for the water-absorptive member are organic substances and inorganic substances. Each of these materials can be used alone or in combination.

Examples of the organic substances are naturally-occurring polymers and synthetic polymers.

The naturally-occurring polymers include, for example, cellulose polymers, alginic acid polymers, mannan polymers, pullulan polymers and chitin-chitosan polymers. The naturally-occurring polymers may be commercially available products or appropriately prepared by extracting from naturally occurring substances.

The synthetic polymers include, for example, acrylic polymers, acrylamide polymers, poly(ethylene oxide) polymers and polyester polymers. The synthetic polymers may be commercially available products or appropriately prepared synthetically.

The inorganic substances include, for example, silica gel, zeolite and magnesium oxide.

The water-absorbing means, that is, a water-absorber configured to absorb the water formed in the heat-exchange chamber, preferably has such a volume that is substantially constant before and after the water absorption. For example, the water-absorbing means preferably satisfies the following condition:

$$(Y / X) \geq 1.0$$

wherein X $(cm^3)$ represents the volume of the water-absorbing means before water absorption; and Y $(cm^3)$ represents the volume of the water-absorbing means after water absorption.

The shape of the water-absorbing means, that is, a water-absorber configured to absorb the water formed in the heat-exchange chamber, can be appropriately selected according to the purpose without limitation. Preferred examples of its sectional shape are sheet-like shape and platy shape. Preferred examples of its planar shape are square shape and rectangular shape. Each of these shapes can be employed alone or in combination.

The structure of the water-absorbing means can be appropriately selected according to the purpose without limitation and is preferably a molded article structure of the water-absorptive member and/or a structure comprising a substrate and the water-absorptive member. Each of these structures can be employed alone or in combination.

When the water-absorbing means has the structure comprising the substrate and the water-absorptive member, the substrate may have, for example, a porous structure or a sheet-like structure and may comprise a soft material and/or a hard material.

The water-absorbing means, for example, is preferably arranged detachably at least at part of a wall of the heat-exchange chamber. More preferably, when the water-absorbing means is a sheet-like structure, one of the sheet faces of the water-absorbing means is detachably stuck to at least part of the wall of the heat-exchange chamber. By configuring the water-absorbing means to be detachable, the water-absorbing means after water absorption can be easily disposed, the fuel cell system can be very easily regenerated and has very satisfactory recycling efficiency and environmental friendliness. When the water-absorbing means is detachably stuck, the water-absorbing means can be easily disposed of only by peeling off the stuck surface. The resulting fuel cell system can be very easily regenerated and has further satisfactory recycling efficiency and environmental friendliness.

The procedure for sticking the water-absorbing means is not specifically limited and can be selected from among conventional procedures. The sticking can be carried out, for example, by applying a double-sided pressure-sensitive adhesive tape to the water-absorbing means or by applying a coating composition and/or emulsion of a pressure-sensitive adhesive to the water-absorbing means.

When the water-absorbing means is detachably arranged at least at part of the wall of the heat-exchange chamber, the water-absorbing means can be disposed of and replaced (exchanged) with another one after the water absorption in the water-absorbing means reaches saturation. The time of the disposal and replacement can be appropriately selected according to the purpose without limitation.

To achieve the above-mentioned configuration, the fuel cell cartridge preferably satisfies the following condition: X≤Y, wherein X represents the time for the fuel reserved in the fuel reservoir of the fuel cell cartridge to be completely consumed; and Y represents the time for the quantity of absorbed water in the water-absorbing means arranged in the outer surface of the fuel cell cartridge to reach saturation, where the quantity of absorbed water is the total water absorption when a plurality of the water-absorbing means is arranged. The quantity of absorbed water in the water-absorbing means can be desirably controlled by typically controlling the amount and size of the water-absorptive member.

The water-absorbing means may be arranged at an inner wall of the heat-exchange chamber partially or entirely.

For efficiently removing or draining the water formed in the heat-exchange chamber, the water-absorbing means is preferably arranged at a lower or bottom inner wall of the heat-exchange chamber in the fuel cell system. In this configuration, the water formed in the heat-exchange chamber moves downward by the action of the gravitation and is finally absorbed and fixed by the water-absorbing means arranged at a lower inner wall of the heat-exchange chamber and thus efficiently removed.

In this case, the fuel cell system can be arranged so that the air electrode and other components of the fuel-cell power generation part are laminated in a direction substantially perpendicular to a plane on which the fuel cell system is arranged (installation plane), and the water-absorbing means can be arranged substantially horizontally below or under the fuel cell system. Thus, the water formed in the air electrode of the fuel-cell power generation part is allowed to drop by the action of gravitation to thereby be absorbed by the water-absorbing means. The resulting fuel cell system exhibits satisfactory efficiency in water absorption and can further be miniaturized.

The number of the water-absorbing means can be appropriately set according to the purpose without limitation. The fuel cell system may have one water-absorbing means or two or more water-absorbing means. When the fuel cell system comprises two or more water-absorbing means, it can be so configured, for example, that the fuel cell cartridge is rotated at the time when the quantity of absorbed water in one water-absorbing means reaches saturation to thereby allow another water-absorbing means which has not absorbed water to absorb the water.

Whether or not the water is absorbed by the water-absorbing means and/or whether or not the quantity of absorbed water reaches saturation can be easily determined by using signal generating means mentioned later.

The water-absorbing means preferably comprises signal generating means being so configured as to generate a signal indicating water absorption. This allows any one to easily detect water absorption of the water-absorbing means and to easily determine, for example, whether or not the water-absorbing means should be replaced.

The signal generated by the signal generating means is not specifically limited and can be appropriately selected, as long as the water absorption can be detected or distinguished. Examples of the signal are discoloration, deformation, pH change, temperature change, pressure change, magnetic change, voltage change and material absorption-desorption.

Each of these signals can be used alone or in combination. Among them, preferred are signals that can be easily distinguished and substantially applies no adverse effect on the electrical apparatus using the fuel cell system comprising the fuel cell cartridge. The signal is more preferably one capable of being visually detected, of which discoloration is specifically preferred.

The signal generating means in the case where the signal is the discoloration may comprise (1) a compound capable of discoloring upon water absorption, (2) a compound capable of releasing one or more ions upon water absorption, and a pH-indicator, or (3) a compound capable of color-developing upon dissolution as a result of water absorption. Each of these can be used alone or in combination.

A suitable example of the compound capable of discoloring upon water absorption in the aspect (1) is cobalt chloride.

Suitable examples of the compound capable of releasing one or more ions upon water absorption in the aspect (2) are weakly alkaline crystalline substances each having a pH upon electrolytic dissociation of more than 7 and 12 or less. Examples of the weakly alkaline crystalline substances are ammonium carbonate, sodium carbonate and sodium tartrate. Examples of the pH-indicator are phenolphthalein and thymol blue.

Suitable examples of the compound capable of color-developing upon dissolution as a result of water absorption in the aspect (3) are a dried substance comprising sodium nitrite and sulfanilic acid, and a dried substance comprising N-1-naphthylethylenediamine and tartaric acid.

The signal generating means can be any signal generating means that can generate a signal corresponding to the presence or absence of water absorption and is preferably capable of controlling the generation of the signal according to the quantity of absorbed water. In the latter configuration, the generation of the signal can correspond to the quantity of absorbed water in the water-absorbing means, and the absorbed water can be quantitatively determined by determining the amount of the signal generation. When the signal is the color development, for example, the quantity of absorbed water in the water-absorbing means can be easily visually determined depending on the density of the developed color.

As is described above, the water-absorbing means preferably constitutes part of an inner wall of the heat-exchange chamber. Alternatively, the water-absorbing means is preferably arranged detachably at least on part of a surface of the fuel cell cartridge for supplying a fuel to the fuel-cell power generation part. In this case, the heat-exchange chamber is constituted only after the fuel cell cartridge is attached to the fuel cell system. The water-absorbing means can be replaced every time when the fuel in the fuel cell cartridge runs out and the fuel cell cartridge is replaced. In addition, the fuel cell system can have a simplified structure, since the heat-exchange chamber is newly constituted upon replacement of the fuel cell cartridge.

At least part of a wall of the heat-exchange chamber preferably constitutes water-collecting means for collecting the water formed in the heat-exchange chamber and transporting the water to the water-absorbing means. In this case, the water-absorbing means is arranged with the interposition of the water-collecting means and can further efficiently absorb and remove the water which is formed in the heat-exchange chamber and is transported via the water-collecting means.

The water-collecting means, that is, a body configured to collect the water formed in the heat-exchange chamber and to transport the water to the water-absorber, can be arranged at any position appropriately selected according to the purpose without limitation. For example, it is preferably arranged at a wall of the heat-exchange chamber extending between the fuel-cell power generation part and the porous membrane. When the layer plane of the air electrode of the fuel-cell power generation part is substantially vertical to the installation plane, the water-collecting means is preferably arranged in contact with the lower end of the air electrode for efficiently collecting the water formed in the air electrode.

The water-collecting means, that is, a body configured to collect the water formed in the heat-exchange chamber and to transport the water to the water-absorber, can be appropriately selected according to the purpose without limitation. The water-collecting means preferably comprises a receiving port for receiving the water formed in the fuel-cell power generation part and a discharging port for discharging water received from the receiving port into the water-absorbing means. The receiving port preferably has an opening area greater than the opening area of the discharging port for higher water-collecting efficiency. Preferably, the receiving port of the water-collecting means is arranged so as to face the heat-exchange chamber, and the discharging port of the water-collecting means is arranged in contact with the water-absorbing means for further efficiently removing or draining the water.

The water-collecting means can be appropriately selected according to the purpose without limitation and is preferably a funnel member.

The material for the water-collecting means can be appropriately selected according to the purpose without limitation and includes, for example, resins, metals and ceramics.

Fuel-cell Power Generation Part

The fuel-cell power generation part can be appropriately selected from known or conventional articles without limitation. The fuel-cell power generation part preferably comprises at least a fuel electrode, a solid electrolyte and an air electrode.

The fuel electrode serves as an anode and has the function of oxidizing the fuel to yield protons and electrons.

The fuel electrode can be appropriately selected from known or conventional articles without limitation. The fuel electrode preferably comprises an anode catalyst layer and an anode collector layer arranged in this order from the solid electrolyte side.

The anode catalyst layer can be appropriately selected from known or conventional articles without limitation, as long as it has the function of oxidizing the fuel. The anode catalyst layer may be prepared, for example, by applying or charging a material to a porous conductive film such as a carbon paper. Examples of the material are fine particles of platinum or an alloy between platinum and a transition metal such as ruthenium; carbon powder; and a polymer capable of forming an electrolyte layer.

The anode current collector layer can be appropriately selected from known or conventional articles without limitation, as long as it can efficiently take out the electrons generated in the anode catalyst layer. A suitable example thereof is a mesh of a metal such as stainless steel (SUS) or nickel (Ni).

The solid electrolyte plays a role as a passage for transporting the protons generated in the anode to the cathode: The solid electrolyte can be appropriately selected from known or conventional articles without limitation. Examples of the materials for the solid electrolyte are materials that are solid at room temperature but can transmit and transport protons as in electrolyte solutions. Among them, ionic conductors having no electron conductivity, such as perfluorosulfonic acid polymers, are preferred. The solid electrolyte may be a commercially available product or appropriately prepared synthetically. The perfluorosulfonic acid, for example, is commercially available as Nafion from E.I. du Pont de Nemours and Company.

The solid electrolyte preferably has a laminar shape, and the thickness thereof can be appropriately selected according to the purpose.

The air electrode serves as a cathode and has the functions of reducing oxygen to yield ions and forming water from the ions with the electrons and protons generated in the fuel electrode.

The air electrode can be appropriately selected according to the purpose without limitation and preferably comprises a cathode catalyst layer and a cathode current collector layer arranged in this order from the solid electrolyte side.

The cathode catalyst layer can be appropriately selected from known or conventional articles without limitation, as long as it has the functions of reducing oxygen to yield ions and forming water from the ions with the electrons and protons generated in the fuel electrode. The cathode catalyst layer may be prepared, for example, by applying or charging a material to a porous conductive film such as a carbon paper. Examples of the material are fine particles of platinum or an alloy between platinum and a transition metal such as ruthenium; carbon powder; and a polymer capable of forming an electrolyte layer.

The cathode current collector layer can be appropriately selected from known or conventional articles without limitation, as long as it is capable of efficiently supplying electrons to the cathode catalyst layer. A suitable example of the material for the cathode current collector layer is a mesh of a metal such as stainless steel or nickel (Ni).

The cathode current collector layer preferably has such a structure as to introduce the air (oxygen) by spontaneous diffusion, such as a porous structure.

The fuel electrode, the solid electrolyte and the air electrode constitute, in combination, a unit cell (unit fuel-cell power generation part). The unit cell (unit fuel-cell power generation part) generally comprises layers of the fuel electrode, the solid electrolyte and the air electrode and has a laminar and/or sheet-like shape. The unit cell can be laminated with one or more other unit cells.

The fuel-cell power generation part has only to have one ply of the unit cell or may have two or more unit cells according to desired electric power generation. When two or more plies of the unit cell are contained, they may be arranged, for example, in series or in parallel. In the latter configuration, the plural unit cells may be arranged in one plane, as described in Japanese Patent Application Laid-Open (JP-A) No. 05-325993.

The output voltage of the unit cell can be appropriately set according to the purpose without limitation and is generally 0.8 V or less and frequently about 0.3 V to about 0.6 V in the case of, for example, the direct methanol fuel cell, while depending on the output current.

The operating voltage required in electrical apparatuses such as portable information-processing apparatuses including mobile phones is generally about 1.5 V to about 12 V. In these applications, therefore, two or more plies of the unit cells are preferably arranged in series to yield a desired voltage.

The position of the unit cell in the fuel cell system can be appropriately selected according to the purpose without limitation and may be substantially horizontal or substantially vertical with respect to the installation plane. In the latter configuration, the water generated in the air electrode can be efficiently collected by the action of the gravitation. In this case, the water-absorbing means is preferably arranged below or under the fuel-cell power generation part for allowing the water-absorbing means to further efficiently absorb the water.

The fuel cell cartridge preferably comprises a fuel reservoir and has the water-absorbing means at least at part of its outer surface.

The shape, structure, material, size and other configurations of the fuel cell cartridge are not specifically limited and can be appropriately selected according to the purpose.

Examples of the shape of the fuel cell cartridge are columnar shapes including cylindrical shape and prism shape, conic shapes such as circular conic shape and pyramid shape; truncated conic shapes such as truncated circular conic shape and truncated pyramid shape; and rod shape. Among them, the fuel cell cartridge preferably has a columnar shape and more preferably has a cylindrical shape.

Regarding the structure, the fuel cell cartridge may comprise a single member or two or more members.

The material is preferably selected from materials having satisfactory strength, such as synthetic resins, naturally-occurring resins, metals, glass and ceramics. Each of these materials can be used alone or in combination. Among them, metals and synthetic resins are preferred.

The size of the fuel cell cartridge can be appropriately set according typically to the size of the fuel cell system to which the fuel cell cartridge is mounted. In the present invention, the fuel cell cartridge specifically preferably has such a size as to be mounted to information-processing apparatuses such as mobile phones.

The shape, structure, material, size and other configuration of the fuel reservoir are not specifically limited, as long as the fuel reservoir can reserve the fuel to be supplied to the fuel-cell power generation part, and are suitably selected according typically to the size of the fuel cell system and/or the electrical apparatus to which the fuel cell cartridge is mounted.

The fuel to be reserved in the fuel reservoir can be suitably selected typically according to the type of the fuel cell system and can be any of liquids and gases. The fuel is generally a liquid and is, for example, methanol when the fuel cell system is a direct methanol fuel cell system.

The fuel reservoir preferably comprises fuel supply means which is so configured as to supply the reserved fuel to the fuel-cell power generation part.

The fuel supply means can be appropriately selected according to the purpose without limitation. The fuel supply means is preferably so configured as to be intruded into the fuel reservoir and to supply the fuel reserved in the fuel reservoir to the fuel-cell power generation part upon intrusion into the fuel reservoir. A nozzle is preferably used as the fuel supply means. This configuration allows the fuel to be supplied to the fuel-cell power generation part only in the case of necessity. Before the fuel cell cartridge is mounted to the fuel cell system, the nozzle (fuel supply means) is not intruded into the fuel reservoir and the fuel in the fuel reservoir is prevented from leaking out from the fuel reservoir. After the fuel cell cartridge is mounted to the fuel cell system, the nozzle is intruded into the fuel reservoir, and the fuel in the fuel reservoir is discharged out from the fuel reservoir and is supplied to the fuel-cell power generation part.

The position at which the fuel supply means is arranged can be appropriately selected according to the purpose without limitation. When the fuel cell cartridge has, for example, a columnar shape such as cylindrical shape or prism shape and/or a rod shape, the fuel supply means is preferably arranged at one edge of the fuel cell cartridge. This allows the water-absorbing means to be arranged with a large area on the peripheral side face of the fuel cell cartridge.

The fuel cell cartridge may further comprise any other means or devices such as auxiliary peeling means, protecting means and safety means.

The auxiliary peeling means is means having the function of assisting the water-absorbing means to be peeled off from the fuel cell cartridge upon disposal of the water-absorbing means. The auxiliary peeling means can be appropriately selected according to the purpose without limitation, as long as it has the above-mentioned function, and includes, for example, a separate paper (mount) for conventional pressure-sensitive adhesive tapes. The water-absorbing means can be easily disposed of and/or replaced by placing the separate paper (mount) on a surface of the fuel cell cartridge and allowing the water-absorbing means to be tackily adhered to the surface of the release paper.

The protecting means is not specifically limited, as long as it can cover at least the surface of the water-absorbing means to thereby prevent the water-absorbing means from absorbing water until the use of the fuel cell cartridge. A cover film, for example, is suitably used for covering the surface of the water-absorbing means.

The safety means is not specifically limited, as long as it has the function of preventing the fuel reserved in the fuel reservoir from leaking out until the use of the fuel cell cartridge. When the fuel cell cartridge has the nozzle, a protective cap is suitably used for covering the nozzle so as to prevent the intrusion of the nozzle into the fuel reservoir.

The fuel interface has, for example, the function of temporarily storing the fuel delivered from the fuel reservoir of the fuel cell cartridge. By arranging the fuel interface, the fuel can be smoothly and efficiently supplied from the fuel interface to the fuel electrode typically via a fuel induction path by the action of spontaneous movement such as flowage and/or diffusion. Thus, a constant amount of the fuel can be stably supplied to the fuel electrode.

The shape, structure, size and other configurations of the fuel interface can be appropriately set according to the purpose without limitation.

The position of the fuel interface can be appropriately set according to the purpose without limitation. The fuel interface is, for example, arranged in the vicinity of the fuel supply means, such as the nozzle, of the fuel cell cartridge.

The fuel cell system of the present invention can be advantageously used in electrical apparatuses, typically miniature portable information-processing apparatuses, as a power supply instead of conventional cells.

In the fuel cell system of the present invention, the fuel reserved in the fuel reservoir of the fuel cell cartridge is supplied from the fuel reservoir to the fuel-cell power generation part. Then, an electric power generation reaction using the fuel occurs to thereby generate electric power in the fuel-cell power generation part. The generated electricity (electric power) is utilized as drive power typically for electrical apparatuses. The electric power generation reaction also yields water. The water is absorbed by the water-absorbing means arranged at least at part of the heat-exchange chamber. Thus, the water formed as a result of the electric power generation reaction is easily and reliably absorbed and removed within the fuel cell system without leaking out.

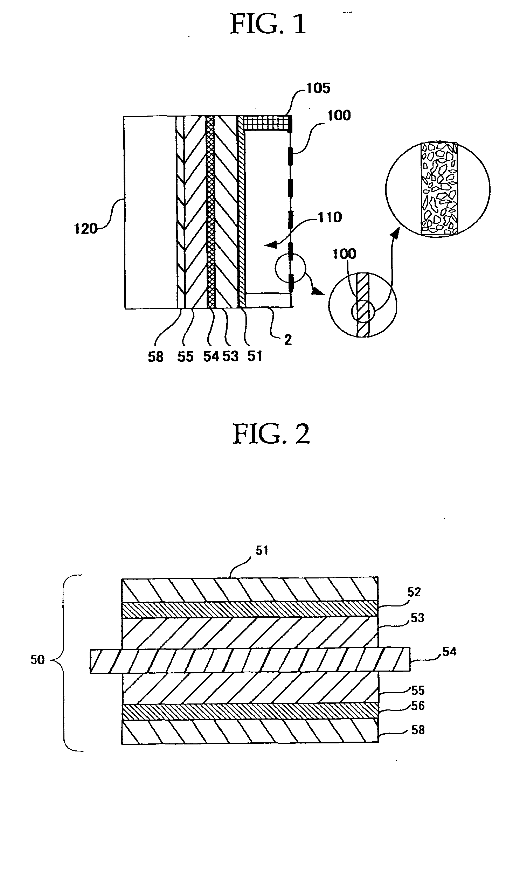

Specific examples of the fuel cell system of the present invention will be illustrated with reference to the drawings. A fuel cell system shown in FIG.1 comprises a fuel-cell power generation part 50 and a heat-exchange chamber 110.

The fuel-cell power generation part 50 comprises an air-electrode collector 51, a carbon paper 52, an air electrode (cathode catalyst layer) 53, a solid electrolyte 54, a fuel electrode (anode catalyst layer) 55, a carbon paper 56 and a fuel-electrode collector 58 laminated in this order (FIG. 2).

The heat-exchange chamber 110 is a space surrounded and constituted by an exposed surface of the air-electrode collector 51, a porous membrane 100, a spacer 105, and a water-absorptive member 2 serving as the water-absorbing means.

In the heat-exchange chamber 110, the exposed surface of the air-electrode collector 51 faces the porous membrane 100. The spacer 105 and the water-absorptive member 2 extend along the peripheries of the exposed surface of the air-electrode collector 51 and the porous membrane 100 to thereby form a sealed structure. The water-absorptive member 2 positions in a lower part of the heat-exchange chamber 110. More specifically, the fuel-cell power generation part 50 comprises the components having their lamination planes in a direction substantially perpendicular to the installation plane, and the surface of the water-absorptive member 2 is positioned at the lower end of the air-electrode collector 51 of the fuel-cell power generation part 50 (FIG. 1).

In this fuel cell system, the gas containing water vapor derived from the water formed as a result of the electric power generation reaction does not permeate or pass through the porous membrane 100 and undergoes heat exchange in the heat-exchange chamber 100 to form water as a result of condensation. The water drops by the action of the gravitation and is absorbed by the water-absorptive member 2. In contrast, the air for use in the electric power generation reaction permeates or passes through the porous membrane 100 and is supplied to the electric power generation reaction, which avoids deteriorated electric power generation.

Electrical Apparatus

Electrical apparatus embodying the present invention comprises at least the fuel cell system of the present invention and has a general configuration necessary for performing functions according to applications.

The electrical apparatus can be appropriately selected according to the purpose without limitation and includes, for example, apparatuses that can be driven by using cells, of which portable information-processing apparatuses are preferred.

Examples of the portable information-processing apparatuses are mobile phones, cradles for mobile phones, personal computers, digital cameras, portable audio apparatuses, MP3 players, PDAs (personal digital assistants) and toys.

In electrical apparatus embodying the present invention, the fuel is supplied to the fuel-cell power generation part in the fuel cell system. Then, an electric power generation reaction using the fuel occurs to thereby generate electric power in the fuel-cell power generation part. The electricity (electric power) generated by the electric power generation is utilized as driving force of the electrical apparatus. The electric power generation reaction also yields water. The water is condensed and removed in the heat-exchange chamber. In the fuel cell system of the electrical apparatus, the water formed as a result of the electric power generation reaction is easily and reliably removed by the action of the heat-exchange chamber without leaking out from the electrical apparatus.

Electrical apparatus embodying the present invention will be illustrated in further detail with reference to the drawings, by taking a mobile phone and a mobile phone cradle as an example.

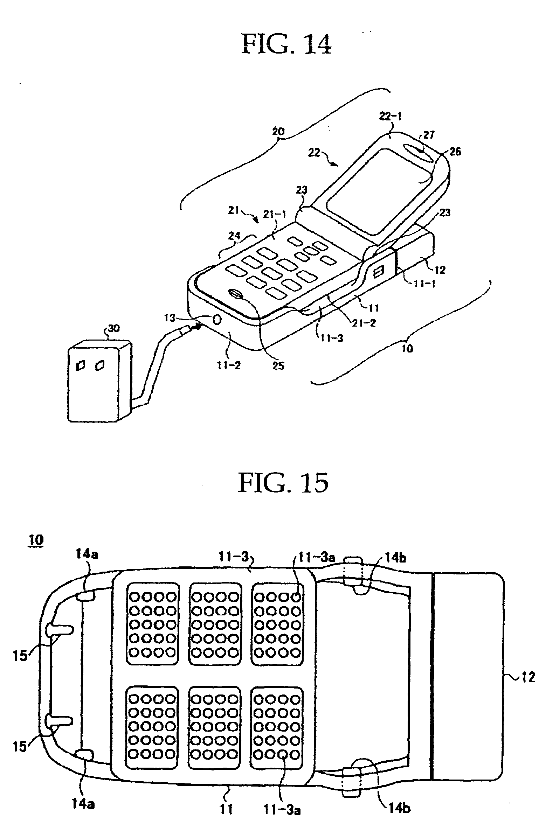

FIG. 14 is a perspective view of a mobile phone mounted to a mobile phone cradle. The mobile phone cradle 10 cradles the mobile phone 20 and has such a configuration as to be connected to a power adapter 30 (AC-DC converter) for connecting to an external power supply such as a commercial power supply. The mobile phone 20 comprises a mobile phone main body 21 and a mobile phone movable unit 22. The mobile phone main body 21 comprises function keys 24 and a microphone 25 in an inner surface 21-1. The mobile phone movable unit 22 comprises a liquid crystal display 26 and a speaker 27 in an inner surface 22-1. The mobile phone movable unit 22 is connected to the mobile phone main body 21 by the action of a hinge 23. The mobile phone movable unit 22 is rotatable with the hinge 23 as an axis. The following operations can be carried out while the mobile phone 20 is cradled by the mobile phone cradle 10. The mobile phone 20 can fold so that the inner surface 21-1 of the mobile phone main body 21 faces the inner surface 22-1 of the mobile phone movable unit 22. The mobile phone movable unit 22 is opened so as to enable one to push the function keys 24 while watching the liquid crystal display 26. In addition, one can use this unit as a normal mobile phone by holding a main body (cradle main body 11) of the mobile phone cradle 10.

The mobile phone cradle 10 comprises the cradle main body 11 and a fuel cell cartridge 12. The cradle main body 11 houses a fuel cell system (not shown). The fuel cell cartridge 12 houses a fuel. The fuel cell cartridge 12 is arranged in contact with an end face 11-1 of the cradle main body 11 near to the hinge 23 of the mobile phone 20, namely, near to the speaker 27 when the mobile phone movable unit 22 is opened (unfolded). An external power supply connection 13 for connecting to the power adapter 30 is arranged on the other end face 11-2 of the cradle main body near to the microphone 25. The cradle main body 11 serves to hold or cradle the mobile phone main body 21 so that its inner surface 11-3 faces an outer surface 21-2 of the mobile phone main body 21. Hereinafter, an edge of the cradle main body 11 near to the fuel cell cartridge 12 is referred to as "the rear" of the cradle main body 11, and the other edge near to the external power supply connection 13 is referred to as "the front" of the cradle main body 11, for the sake of convenience.

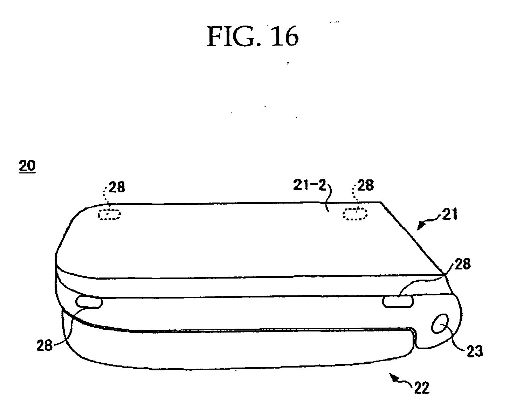

FIGS. 15 and 16 are plan view of the mobile phone cradle and external perspective view of the mobile phone, respectively. Locking members 14a and 14b and connectors 15 are arranged on the inner surface 11-3 of the cradle main body 11. The locking members 14a and 14b serve to engage with concave portions 28 arranged on a side of the mobile phone main body 21. The connectors 15 serve to supply electric power to the mobile phone 20. The locking members 14a arranged in the front of the inner surface 11-3 serve to engage with two concave portions 28 arranged near to the microphone 25. The locking members 14a each have a spring at the bottom to thereby apply spring stress in a direction toward the mobile phone main body 21. Pawls of the locking members 14a engage with lower inner walls of the concave portions 28 to prevent the mobile phone from easily moving upward.

The locking members 14b arranged in the rear of the inner surface 11-3 of the cradle main body 11 serve to engage with two concave portions 28 arranged near to the hinge 23 (FIGS. 15 and 16). Pawls 14b-1 of the locking members 14b engage with lower inner walls of the concave portions 28 to prevent the mobile phone main body 21 from easily moving upward. The locking members 14b further have convex portions. The convex portions are connected to the pawls and extrude from the side of the cradle main body 11. By pressing down the convex portions, the pawls dissociate themselves from the concave portions 28 to thereby detach the mobile phone main body 21 from the cradle main body 11.

The mobile phone 20 can be attached to the cradle main body 11 in the following manner. Initially, the microphone 25 side of the mobile phone 20 is introduced into the front of the inner surface 11-3 of the cradle main body 11, and the pawls of the front locking members 14a are allowed to engage with the concave portions 28 of the mobile phone main body 21. Next, the mobile phone 20 is pressed to the inner surface 11-3 of the cradle main body 11 to move the hinge 23 side of the mobile phone main body 21 downward, and the pawls of the rear locking members 14b are allowed to engage with the concave portions 28 of the mobile phone main body 21.

The mobile phone 20 can be detached from the cradle main body 11 in the following manner. Initially, the convex portions of the two locking members 14b in the rear of the cradle main body 11 are simultaneously pressed downward and are moved in such a direction as to open the locking members 14b to thereby release the engagement. The hinge 13 side of the mobile phone main body 11 is detached from the cradle main body 11, and the mobile phone 20 is moved in a slanting backward direction to thereby release the engagement with the two front locking members 14a of the cradle main body 11.

As is described above, the mobile phone main body 21 of the mobile phone 20 is fixed by engaging with the cradle main body 11. This unit can thereby be used without anxiety for detaching the mobile phone main body 21 from the cradle main body 11 even when one holds the cradle main body 11 and operates the mobile phone 20, for example, presses down the function keys or makes a phone call. In addition, the mobile phone movable unit 22 can fold compact for carrying, since the mobile phone main body 21 is fixed to the cradle main body 11.

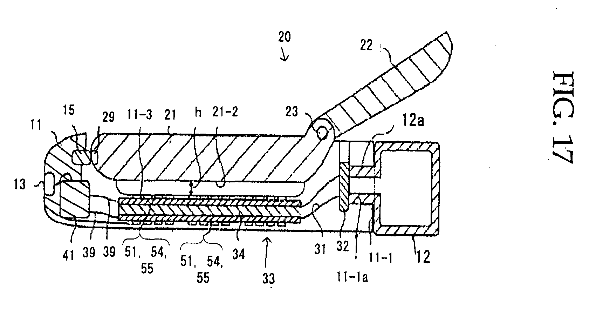

With reference to FIG.17, the cradle main body 11 comprises, for example, a fuel induction path 31, a fuel interception 32, a fuel cell 33, a control unit 41, an external power supply connection 13 and a connector 15. The fuel cell cartridge 12 is arranged in contact with the rear end face 11-1 of the cradle main body 11 and supplies the fuel to the fuel induction path 31. The fuel interception 32 serves to intercept the induction of the fuel. The fuel cell 33 has a fuel chamber 34 connected to the fuel induction path 31. The control unit 41 serves to control the supply of the electric power generated by the fuel cell 33 to the mobile phone 20. The external power supply connection 13 is connected to the power adapter 30 shown in FIG. 15, to which the electric power is supplied from the external power supply. The connector 15 serves to supply the electric power to the mobile phone 20.

The fuel cell cartridge 12 is arranged in contact with the rear end face 11-1 of the cradle main body 11 and is fixed therewith by engagement. The fuel discharging port 12a of the fuel cell cartridge 12 has a convex shape to thereby engage with the concave portion 11-1a of the end face 11-1 of the cradle main body 11. In FIG. 17, reference characters 29, 39 and h represent an electrode of the mobile phone, wiring and air gap, respectively

Electrical apparatus embodying the present invention has been explained herein by taking the mobile phone and the mobile phone cradle as an example. A fuel cell system embodying the present invention, however, can also be used in any other electrical apparatus.

Method for Recovering Water Formed in Fuel Cell System

The method for recovering water formed in a fuel cell system of the present invention at least comprises the steps of condensing a gas containing water vapor by heat exchange in a heat-exchange chamber to thereby yield water, and allowing the water-absorbing means to absorb the water formed as a result of condensation. The water vapor is derived from water formed in the fuel-cell power generation part, and the heat-exchange chamber at least partially comprises a porous membrane. The method may further comprise any other steps or processes according to necessity.

The method for recovering water formed in a fuel cell system can be advantageously carried out by implementing a fuel cell system embodying the present invention.

The method for recovering water formed in a fuel cell system embodying the present invention is suitably applied to the absorption and/or recovery of water formed as a result of an electric power generation reaction in the fuel-cell power generation part of the fuel cell system.

In the method for recovering water formed in a fuel cell system embodying the present invention, the electric power generation reaction using the fuel yields water in the fuel-cell power generation part. The gas containing water vapor derived from the water undergoes heat exchange and condensation to thereby form water in the heat-exchange chamber. The water formed as a result of condensation is easily and reliably removed within the heat-exchange chamber and does not leak out from the fuel cell system.

The present invention will be illustrated in further detail with reference to several examples below, which are not intended to limit the scope of the present invention.

Example 1

An example of the fuel cell system embodying the present invention will be illustrated with reference to the drawings. With reference to FIG.1, the fuel cell system comprises a fuel-cell power generation part 50, a heat-exchange chamber 110 and a fuel chamber 120. The fuel cell according to Example 1 was attached to the mobile phone and the mobile phone cradle shown in FIGS. 14 through 17.

In FIG.1, the fuel-cell power generation part 50 is shown as a laminated body having an air-electrode collector 51, an air electrode (cathode) 53, a solid electrolyte 54, a fuel electrode (anode) 55, and a fuel-electrode collector 58.

The fuel-cell power generation part 50 shown in FIG. 2 had an air-electrode collector 51, a carbon paper 52, an air electrode (cathode) 53, a solid electrolyte 54, a fuel electrode (anode) 55, a carbon paper 56 and a fuel-electrode collector 58 laminated in this order. The fuel-cell power generation part 50 was a direct methanol fuel cell.

In this example, the air electrode (cathode) 53 comprises a platinum-supporting catalyst (TEC10E50E, available from Tanaka Kikinzoku Kogyo K. K.). The solid electrolyte 54 comprised a partially fluorinated solid electrolyte (Nafion NF117, available from Du Pont). The fuel electrode (anode) 55 comprises a platinum-ruthenium alloy supporting catalyst (TEC61E54, available from Tanaka Kikinzoku Kogyo K. K.).

The heat-exchange chamber 110 was a space surrounded and constituted by the exposed surface of the air-electrode collector 51, a porous membrane 100, a spacer 105 and a water-absorptive member 2 serving as the water-absorbing means.

The water-absorptive member 2 was a sheet with a rectangular planar shape. The water-absorptive member 2 in this example was a sheet made from 0.2 g of an acrylic polymer (Sanfresh, available from Sanyo Chemical Industries, Ltd.) and was capable of easily absorbing and fixing 5 ml of water.

In the heat-exchange chamber 110, the exposed surface of the air-electrode collector 51 faced the porous membrane 100. The spacer 105 and the water-absorptive member 2 extended along the peripheries of the exposed surface of the air-electrode collector 51 and the porous membrane 100 to thereby form a sealed structure. The water-absorptive member 2 positioned in a lower part of the heat-exchange chamber 110. More specifically, the fuel-cell power generation part 50 had the components with their lamination planes in a direction substantially perpendicular to the installation plane, and the surface of the water-absorptive member 2 was positioned at the lower end of the air-electrode collector 51 of the fuel-cell power generation part 50 (FIG.1).

The porous membrane 100 shown in FIG.1 was a porous membrane made from a polytetrafluoroethylene and had a thickness of 100 $\mu$m, an average pore diameter

of 10 μm, a porosity of 50%, an air permeability of 2000 cc/cm$^2$·s, a water permeability of 1 cc/cm$^2$·s and a thermal conductivity of 0.2 W/mK.

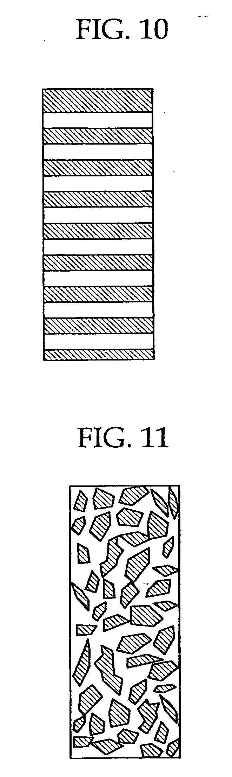

The porous membrane 100 according to Example 1 is indicated by thin lines and thick lines in FIG. 1. The porous membrane 100 had a random pore structure comprising a multiplicity of random pores as shown in FIG. 1 as partially enlarged view. The porous membrane 100 may alternatively have a simple through-hole structure as shown in FIG. 10. In this connection, the porous membranes 100 according to following embodiments indicated by thin lines and thick lines in the drawings also have the random pore structure, as in Example 1.

The distance (interval) between the porous membrane 100 and the air-electrode collector 51 was set at 3 mm herein.

The fuel cell system according to this example was operated in the following manner. Initially, the fuel (methanol) was supplied to the fuel-cell power generation part 50. Then, an electric power generation reaction utilizing the fuel (methanol) occurred in the fuel-cell power generation part 50 to thereby generate electric power. More specifically, (1) methanol as the fuel reacted with water (electric power generation reaction) to generate carbon dioxide and H$^+$ (protons) according to the following formula: $CH_3OH$ (fuel) $+H_2O \rightarrow CO_2$ (emitted from the fuel electrode (anode catalyst layer) 55) $+6H^+ +6e^-$. Next, (2) H$^+$ (protons) in the solid electrolyte migrated (proton conduction) from the fuel electrode (anode catalyst layer) 55 to the air electrode (cathode) 53 to generate an inward current in the fuel cell. Subsequently, (3) the protons were oxidized in the air electrode (cathode) 53 to form water, according to the following formula: $6H^+ +3/2O_2 +6e^- \rightarrow 3H_2O$. As is described above, water was formed in the air electrode (cathode) 53 typically as a result of the electric power generation reaction. The air containing the water (water vapor) underwent heat exchange to condense in the heat-exchange chamber 110. The water formed as a result of condensation moved downward in the heat-exchange chamber 110 by the action of the gravitation and was then absorbed and fixed by the water-absorbing member 2 arranged therein. Thus, the water formed as a result of the electric power generation reaction in the fuel cell system did neither leak out to nor condense outside the fuel cell system and the apparatus was free from uncomfortable feeling in use.

The electricity (electric power) generated by the electric power generation reaction in the fuel-cell power generation part 50 was taken out and was consumed as electric power for the electrical apparatus (mobile phone). The electric power was stably generated at a constant level with time.

Example 2

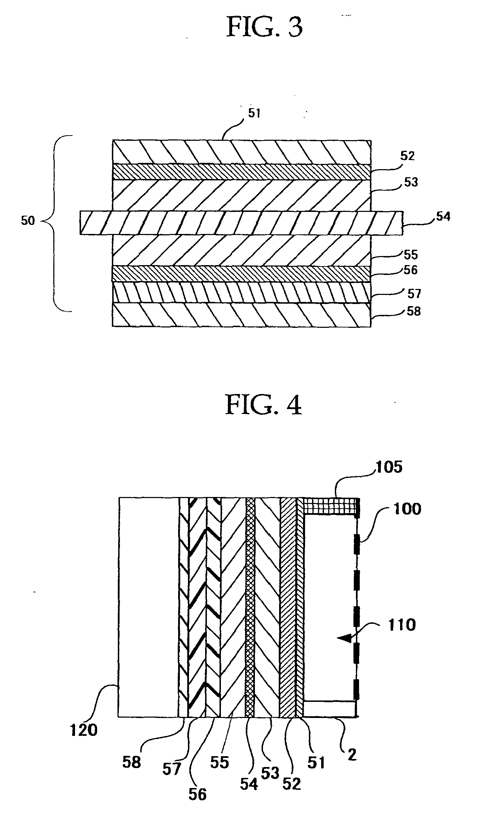

A fuel cell system was prepared so as to have the configuration of Example 1, except for further comprising a shutter 57 arranged between the carbon paper 56 and the fuel electrode collector 58 in the fuel-cell power generation part 50. More specifically, the fuel cell system according to Example 2 had a configuration shown in FIG. 4 and was prepared by the procedure of Example 1, except for using a fuel-cell power generation part shown in FIG. 3. The fuel cell system according to Example 2 exhibited the same operation and advantages as in the fuel cell system according to Example 1.

Example 3

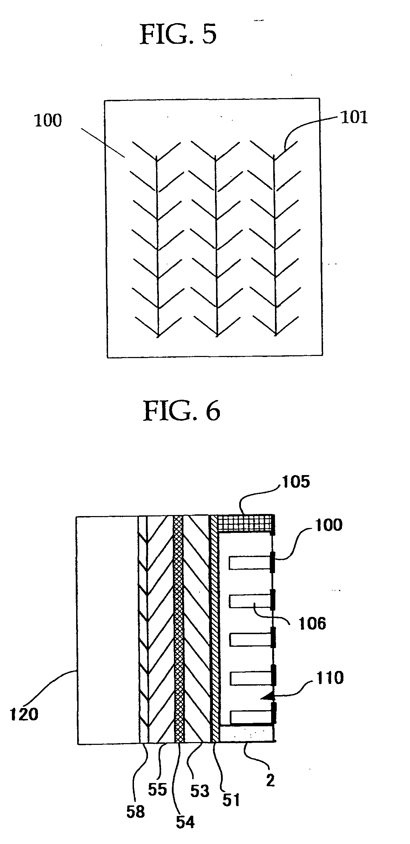

A fuel cell system was prepared so as to have the configuration of Example 1, except for further comprising dendritic driving channles (water courses 101) (FIG. 5) on a surface of the porous membrane 100 exposed to the heat-exchange chamber by photolithography.

The driving channels had a dendritic shape comprising three main lines extending from above and a multiplicity of branches obliquely extending to the main lines from above. The fuel cell system according to Example 3 exhibited similar operation and advantages to the fuel cell system according to Example 1. In addition, this fuel cell system could further efficiently absorb and fix (remove) the water formed as a result of condensation in the heat-exchange chamber 110, since the water efficiently fell along the driving channels into water-absorptive member 2.

Example 4

A fuel cell system was prepared so as to have the configuration of Example 1, except for further comprising heat-exchange rods 106 arranged in the heat-exchange chamber 110. The heat-exchange rods 106 were arranged in contact with the porous membrane 100 at one end and extended in a direction substantially perpendicular to a membrane plane of the porous membrane 100 (FIG. 6).

The heat-exchange rods 106 were made from a metal (stainless steel SUS316) and each had a diameter of 1 mm and a length of 3 mm.

The fuel cell system according to Example 4 exhibited similar operation and advantages to the fuel cell system according to Example 1. In addition, this fuel cell system could further efficiently absorb and fix (remove) the water, since the water was more efficiently formed as a result of condensation on surfaces of the heat-exchange rods 106 in the heat-exchange chamber 110, and the formed water moved along the porous membrane 100 and was efficiently absorbed and fixed by the water-absorptive member 2.

Example 5

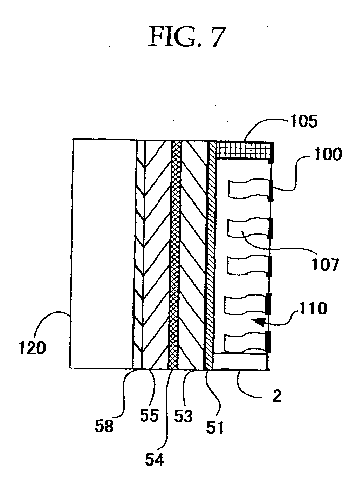

A fuel cell system was prepared so as to have the configuration of Example 1, except for further comprising heat-exchange fins 107 arranged in the heat-exchange chamber 110. The heat-exchange fins 107 were arranged in contact with the porous membrane 100 at one end and extended in a direction substantially perpendicular to a membrane plane of the porous membrane 100 (FIG. 7).

The heat-exchange fins 107 were made from a metal (stainless steel SUS316) and each had a width of 2 mm and a length of 3 mm.

The fuel cell system according to Example 5 exhibited similar operation and advantages to the fuel cell system according to Example 1. In addition, this fuel cell system could further efficiently absorb and fix (remove) the water, since the water was more efficiently formed as a result of condensation on surfaces of the heat-exchange fins 107 in the heat-exchange chamber 110, and the formed water moved along the porous membrane 100 and was efficiently absorbed and fixed by the water-absorptive member 2.

Example 6

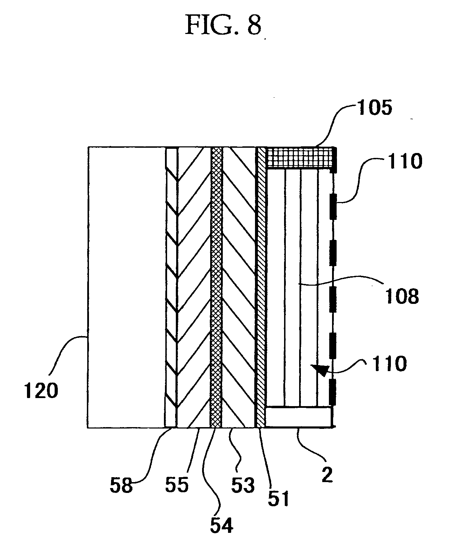

A fuel cell system was prepared so as to have the configuration of Example 1, except for further comprising heat-exchange wires 108 arranged in the heat-exchange chamber 110. The heat-exchange wires 108 extended in a vertical direction in the heat-exchange chamber 110 (FIG. 8).

The heat-exchange wires 108 were made from a metal (stainless steel SUS316) and each had a diameter of 0.5 mm.

The fuel cell system according to Example 6 exhibited similar operation and advantages to the fuel cell system according to Example 1. In addition, this fuel cell system could further efficiently absorb and fix (remove) the water, since the water was more efficiently formed as a result of condensation on surfaces of the heat-exchange wires 108 in the heat-exchange chamber 110, and the formed water moved along the heat-exchange wires 108 and/or the porous membrane 100 and was efficiently absorbed and fixed by the water-absorptive member 2.

Example 7

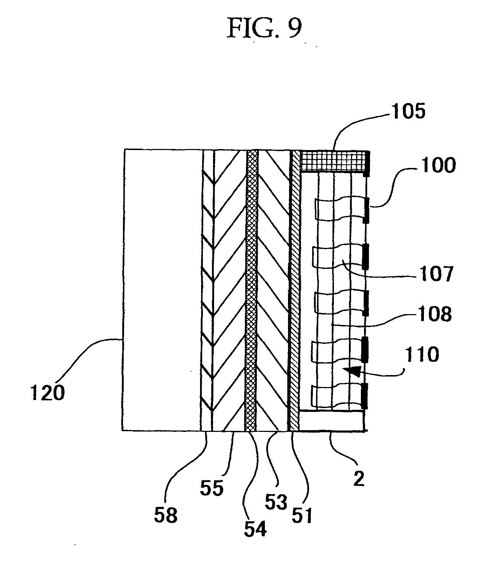

A fuel cell system was prepared so as to have the configuration of Example 1, except for further comprising heat-exchange fins 107 and heat-exchange wires 108 arranged in the heat-exchange chamber 110 (FIG. 9). The heat-exchange fins 107 were arranged in contact with the porous membrane 100 at one end and extended in a direction substantially perpendicular to a membrane plane of the porous membrane 100. The heat-exchange wires 108 extended in a vertical direction in the heat-exchange chamber 110.

The heat-exchange wires 108 were made from a metal (stainless steel SUS316) and each had a diameter of 0.5 mm. The heat-exchange fins 107 were made from a metal (stainless steel SUS316) and each had a width of 2 mm and a length of 3 mm.

The fuel cell system according to Example 7 exhibited similar operation and advantages to the fuel cell system according to Example 1. In addition, this fuel cell system could further efficiently absorb and fix (remove) the water, since the water was more efficiently formed as a result of condensation on surfaces of the heat-exchange fins 107 and the heat-exchange wires 108 in the heat-exchange chamber 110, and the formed water moved along the heat-exchange wires 108 and/or the porous membrane 100 and was efficiently absorbed and fixed by the water-absorptive member 2.

Example 8

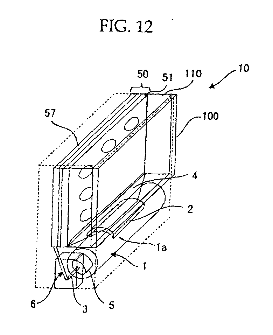

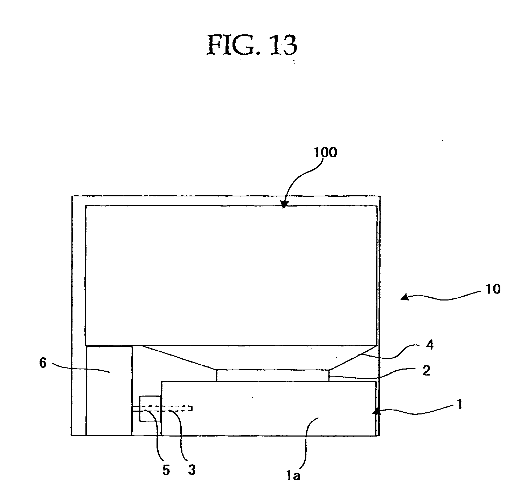

A fuel cell system was prepared so as to have the configuration of Example 1, except for using, as the water-absorptive member, a water-absorptive member 2 arranged on a surface of a fuel cell cartridge 1 (FIGS. 12 and 13).

With reference to FIGS. 12 and 13, the fuel cell cartridge 1 can be easily regenerated in the following manner. When the fuel (methanol) in the fuel reservoir 1a runs out, the fuel cell cartridge 1 is detached from the fuel cell system 10, another portion of the fuel (methanol) is recharged into the fuel reservoir 1a, the water-absorptive member 2 on the surface of the fuel cell cartridge 1 is peeled off and disposed, and another water-absorptive member 2 is stuck to the surface. The fuel cell cartridge 1 exhibits, for example, very satisfactory recycling efficiency, environmental friendliness and handleability. In addition, the fuel cell system 10, the mobile phone and the mobile phone cradle using the fuel cell cartridge 1 exhibit very satisfactory recycling efficiency, environmental friendliness and handleability.

The fuel cell cartridge 1 had the above-mentioned configuration and had a substantially cylindrical shape (FIGS. 12 and 13) as in a dry cell. In this example, a casing constituting the fuel cell cartridge 1 was made from a polysulfone having satisfactory mechanical strength and chemical stability. The casing had a diameter of 15 mm and a length of 60 mm. The fuel cell cartridge 1 included a fuel reservoir 1a reserving methanol as the fuel. The fuel reservoir 1a in this example can store about 6 ml of the fuel (methanol).

A nozzle 3 serving as the fuel supply means penetrated one of the two end faces of the fuel cell cartridge 1. One end of the nozzle 3 was inserted into a fuel reservoir 1a and the other was inserted into a fuel interface 6. Once the nozzle 3 was intruded into the fuel reservoir 1a by the action of a nozzle auxiliary mechanism 5, the fuel in the fuel reservoir 1a was discharged into the fuel interface 6.

A water-absorptive member 2 serving as the water-absorptive member was stuck to a peripheral side face of the fuel cell cartridge 1. The water-absorptive member 2 had a sheet-like shape with a rectangular planar shape. The water-absorptive member 2 in Example 8 was a sheet made from 0.2 g of an acrylic polymer (Sanfresh, available from Sanyo Chemical Industries, Ltd.) and was capable of easily absorbing and fixing 5 ml of water.

The surface of the water-absorptive member was exposed to the heat-exchange chamber 110 with the interposition of a funnel member 4 serving as the water-collecting means and was capable of absorbing the water formed in the fuel-cell power generation part 50 via the funnel member 4.

The water-absorptive member 2 according to Example 8 contained cobalt chloride as the signal generating means, presented blue before absorption of the water formed in the fuel-cell power generation part 50 and presented red (pink) after the water absorption. Whether or not the water-absorptive member 2 has absorbed water could be easily detected or determined.

An embodiment of the present invention can solve the conventional problems and achieve the above-mentioned objects in the following manner.

Specifically, an embodiment of the present invention provides the fuel cell system that is substantially free from, for example, deteriorated performance and uncomfortable feeling in use caused by water formed in a fuel-cell power generation part and can easily and reliably recover the water.

An embodiment of the present invention can further provide electrical apparatus that has the fuel cell system, is substantially free from, for example, deteriorated performance and uncomfortable feeling in use caused by the water formed in the fuel-cell power generation part, can easily and reliably recover the water and can be handled satisfactorily.

In addition, an embodiment of the present invention can provide a method for easily and reliably recovering water formed in a fuel cell system.

A fuel cell system embodying the present invention can be suitably used in a variety of electrical apparatuses including, for example, portable information-processing apparatuses, such as mobile phones, mobile phone cradles, personal computers, digital cameras, portable audio apparatuses, MP3 players and toys. The fuel cell system can be particularly suitably used in the electrical apparatus of the present invention and the method for recovering water formed in a fuel cell system embodying the present invention.

Electrical apparatus embodying the present invention can be suitably used as a variety of electrical apparatuses exhibiting satisfactory properties such as recycling efficiency and environmental friendliness.

The method for recovering water formed in a fuel cell system embodying the present invention can be used for recovering water formed in a fuel cell system.

While the present invention has been described with reference to what are presently considered to be the preferred embodiments, it is to be understood that the invention is not limited to the disclosed embodiments. On the contrary, the invention is intended to cover various modifications and equivalent arrangements included within the spirit and scope of the appended claims. The scope of the following claims is to be accorded the broadest interpretation so as to encompass all such modifications and equivalent structures and functions.

**Claims**

1. A fuel cell system comprising:

    a fuel-cell power generation part which comprises at least a fuel electrode, a solid electrolyte and an air electrode; and
    a heat-exchange chamber configured to cool a gas emitted from the fuel-cell power generation part to thereby form water.

2. A fuel cell system according to claim 1, wherein at least part of a wall of the heat-exchange chamber comprises a porous membrane having continuous pores communicating one surface of the wall with the other surface.

3. A fuel cell system according to claim 2, wherein the porous membrane is positioned at a wall of the heat-exchange chamber facing the fuel-cell power generation part.

4. A fuel cell system according to one of claims 2 and 3, wherein the porous membrane has a thermal conductivity of 0.1 W/mK or more.

5. A fuel cell system according to any one of claims 2 to 4, wherein the porous membrane has an air permeability of 0.1 to 100,000 $cc/cm^2 \cdot s$.

6. A fuel cell system according to any one of claims 2 to 5, wherein the porous membrane has a water permeability of 100 $cc/cm^2 \cdot s$ or less.

7. A fuel cell system according to any one of claims 2 to 6, wherein the porous membrane has at least one of a simple through-hole structure and a random pore structure.

8. A fuel cell system according to any one of claims 2 to 7, further comprising a metal layer positioned at least at part of a plane of the porous membrane facing the fuel-cell power generation part.

9. A fuel cell system according to any one of claims 2 to 8, wherein the porous membrane has a water-repellent surface facing the fuel-cell power generation part.

10. A fuel cell system according to any one of claims 2 to 9, further comprising at least one driving channel on a surface of the porous membrane facing the fuel-cell power generation part, the at least one driving channel serving to guide water formed in the heat-exchange chamber.

11. A fuel cell system according to claim 10, wherein the at least one driving channel has a hydrophilic surface.

12. A fuel cell system according to any one of claims 2 to 11, further comprising heat-exchanger configured to exchange heat, arranged in the heat-exchange chamber, wherein the fuel cell system satisfies the following condition:

$$A \leq B$$

wherein A (W/mK) represents the thermal conductivity of the porous membrane; and B (W/mK) represents the thermal conductivity of the heat-exchanger.

13. A fuel cell system according to claim 12, wherein the heat-exchanger has a thermal conductivity of 10 to 100 W/mK.

14. A fuel cell system according to one of claims 12 and 13, wherein the heat-exchanger comprises at least one metal.

15. A fuel cell system according to any one of claims 12 to 14, wherein the heat-exchanger is at least one selected from the group consisting of rod-like members, feathered members and wire-like members.

16. A fuel cell system according to any one of claims 12 to 15, wherein the heat-exchanger is arranged in contact with the porous membrane.

17. A fuel cell system according to any one of claims 2 to 16, wherein
further comprising a spacer configured to space out between the porous membrane and the fuel-cell power generation part,
wherein the spacer constitutes at least part of a wall of the heat-exchange chamber, the wall extending between the porous membrane and the fuel-cell power generation part.

18. A fuel cell system according to any one of claims 2 to 16, further comprising a water-absorber configured to absorb the water formed in the heat-exchange chamber,
wherein the water-absorber constitutes at least part of a wall of the heat-exchange chamber, the wall extending between the porous membrane and the fuel-cell power generation part.

19. A fuel cell system according to any one of claims 2 to 18, further comprising:

a water-absorber configured to absorb the water formed in the heat-exchange chamber; and
a body configured to collect the water formed in the heat-exchange chamber and to transport the water to the water-absorber,

wherein the body constitutes at least part of a wall of the heat-exchange chamber, the wall extending between the porous membrane and the fuel-cell power generation part.

20. A fuel cell system according to claim 19, wherein the body comprises a receiving port for receiving the water formed in the fuel-cell power generation part, and a discharging port for discharging water received from the receiving port into the water-absorber.

21. A fuel cell system according to claim 20, wherein the receiving port has an opening area greater than the opening area of the discharging port.

22. A fuel cell system according to one of claims 20 and 21, wherein
the receiving port of the body faces the heat-exchange chamber, and wherein the discharging port of the body is arranged in contact with the water-absorber.

23. A fuel cell system according to any one of claims 20 to 22, wherein the body comprises a funnel member.

24. A fuel cell system according to any one of claims 18 to 23, wherein the water-absorber is arranged detachably.

25. A fuel cell system according to any one of claims 18 to 24, wherein the water-absorber is arranged detachably at least on part of a surface of a fuel cell cartridge for supplying a fuel to the fuel-cell power generation part.

26. A fuel cell system according to any one of claims 18 to 25, wherein the water-absorber comprises a water-absorptive member.

27. A fuel cell system according to claim 26, wherein the water-absorptive member is capable of fixing absorbed water.

28. A fuel cell system according to one of claims 26 and 27, wherein the water-absorptive member comprises at least one of an organic substance and an inorganic substance, the organic substance being at least one selected from a naturally-occurring polymer and a synthetic polymer.

29. A fuel cell system according to claim 28, wherein the naturally-occurring polymers is at least one selected from the group consisting of cellulose polymers, alginic acid polymers, mannan polymers, pullulan polymers and chitin-chitosan polymers.

30. A fuel cell system according to one of claims 28 and 29, wherein the synthetic polymers is at least one selected from the group consisting of acrylic polymers, acrylamide polymers, poly(ethylene oxide) polymers and polyester polymers.

31. A fuel cell system according to any one of claims 28 to 30, wherein the inorganic substance is at least one selected from the group consisting of silica gel, zeolite and magnesium oxide.

32. A fuel cell system according to any one of claims 18 to 31, wherein the water-absorber satisfies the following condition:

$$(Y/X) \geq 1.0$$

**characterized in that** X ($cm^3$) represents the volume of the water-absorber before water absorption; and Y ($cm^3$) represents the volume of the water-absorber after water absorption.

33. A fuel cell system according to any one of claims 26 to 32, wherein the water-absorber is at least one of a molded article of the water-absorptive member, and a structure which comprises a substrate and the water-absorptive member.

34. A fuel cell system according to any one of claims 18 to 33, wherein the water-absorber is a sheet-like structure.

35. A fuel cell system according to any one of claims 17 to 34, further comprising a water-absorber configured to absorb the water formed in the heat-exchange chamber, wherein the water-absorber constitutes at least part of a wall of the heat-exchange chamber, the wall extending between the porous membrane and the fuel-cell power generation part, and wherein the spacer is positioned over the water-absorber.

36. A fuel cell system according to any one of claims 1 to 35, wherein the fuel electrode, the solid electrolyte and the air electrode of the fuel-cell power generation part are laminated so that their lamination planes are substantially in parallel with a vertical direction.

37. An electrical apparatus comprising the fuel cell system of any one of claims 1 to 36.

38. An electrical apparatus according to claim 37, wherein the electrical apparatus is at least one selected from the group consisting of mobile phones, mobile phone cradles, personal computers, digital cameras, portable audio apparatuses, MP3 players, PDAs (personal digital assistants) and toys.

39. A method for recovering water formed in a fuel cell system, comprising the steps of:

condensing a gas containing water vapor by heat exchange in a heat-exchange chamber to thereby yield water, the water vapor being derived from water formed in a fuel-cell power generation part, the heat-exchange chamber at least partially comprising a porous membrane; and allowing a water-absorber configured to absorb the water formed in the heat-exchange chamber, to absorb the water formed as a result of condensation.

# FIG. 1

# FIG. 2

# FIG. 3

# FIG. 4

# FIG. 5

# FIG. 6

FIG. 7

FIG. 8

# FIG. 9

# FIG. 10

# FIG. 11

FIG. 12

# FIG. 13

## FIG. 14

## FIG. 15

# FIG. 16

# FIG. 17

**European Patent Office**

## EUROPEAN SEARCH REPORT

Application Number

EP 04 25 8171

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/028974 A1 (GREEN KEVIN J ET AL) 12 February 2004 (2004-02-12) * paragraphs [0001] - [0003], [0005], [0013], [0014], [0016] - [0018], [0021], [0044], [0048] * * figures 1,2 * | 1-10, 36-39 | H01M8/02 H01M8/04 H01M8/10 H01M8/06 |
| X | US 5 364 711 A (YAMADA ET AL) 15 November 1994 (1994-11-15)  * figures 21-23 * * column 37, line 50 - column 39, line 53 * * column 6, line 35 - line 56 * * column 40, line 4 - line 24 * * column 1, line 45 - line 53 * | 1-7, 11-17, 19-34, 36-39 | |
| X | US 6 406 810 B1 (KONRAD GERHARD ET AL) 18 June 2002 (2002-06-18) * column 1, line 9 - line 33 * * column 2, line 3 - line 8 * * column 3, line 33 - column 4, line 16 * * figure 1 * | 1,37 | TECHNICAL FIELDS SEARCHED (IPC)  H01M |
| X | US 4 001 041 A (MENARD ET AL) 4 January 1977 (1977-01-04) * column 2, line 12 - line 19 * * column 3, line 33 - line 53 * * column 4, line 19 - line 25 * * column 5, line 27 - line 66 * * column 6, line 2 - line 13 * | 1,37 | |

The present search report has been drawn up for all claims

| Place of search | Date of completion of the search | Examiner |
|---|---|---|
| Munich | 28 November 2005 | Götz, H |

**ANNEX TO THE EUROPEAN SEARCH REPORT
ON EUROPEAN PATENT APPLICATION NO.** EP 04 25 8171

This annex lists the patent family members relating to the patent documents cited in  the above-mentioned European search report.
The members are as contained in the European Patent Office EDP file on
The European Patent Office is in no way liable for these particulars which are merely  given for the purpose of information.

28-11-2005

| Patent document cited in search report | | Publication date | Patent family member(s) | | Publication date |
|---|---|---|---|---|---|
| US 2004028974 | A1 | 12-02-2004 | AU | 1244802 A | 27-05-2002 |
| | | | CA | 2428657 A1 | 23-05-2002 |
| | | | EP | 1338054 A2 | 27-08-2003 |
| | | | GB | 2368967 A | 15-05-2002 |
| | | | WO | 0241431 A2 | 23-05-2002 |
| | | | GB | 2384616 A | 30-07-2003 |
| | | | JP | 2004520684 T | 08-07-2004 |
| US 5364711 | A | 15-11-1994 | NONE | | |
| US 6406810 | B1 | 18-06-2002 | DE | 19911016 A1 | 21-09-2000 |
| | | | EP | 1035609 A2 | 13-09-2000 |
| US 4001041 | A | 04-01-1977 | CA | 1043862 A1 | 05-12-1978 |

EPO FORM P0459

For more details about this annex : see Official Journal of the European Patent Office, No. 12/82